Europäisches Patentamt

European Patent Office

Office européen des brevets

(19)

(11) **EP 0 647 919 B1**

(12) **EUROPEAN PATENT SPECIFICATION**

(45) Date of publication and mention
of the grant of the patent:
**02.02.2000 Bulletin 2000/05**

(51) Int. Cl.$^7$: **G06T 7/20**, H04N 7/01

(21) Application number: **94115732.3**

(22) Date of filing: **06.10.1994**

(54) **Method and apparatus for correcting motion vectors**

Verfahren und Gerät zur Korrektur von Bewegungsvektoren

Méthode et appareil pour corriger des vecteurs de mouvement

(84) Designated Contracting States:
**DE FR GB IT**

(30) Priority: **11.10.1993 EP 93402507**

(43) Date of publication of application:
**12.04.1995 Bulletin 1995/15**

(73) Proprietor: **THOMSON multimedia
92648 Boulogne Cédex (FR)**

(72) Inventors:
• **Knee, Michael
F-67000 Strasbourg (FR)**
• **Kerdranvat, Michel
F-67870 Bischoffsheim (FR)**
• **Hackett, Andrew
F-67530 Klingenthal (FR)**
• **Bolender, Nadine
F-67000 Strasbourg (FR)**

(74) Representative:
**Hartnack, Wolfgang, Dipl.-Ing.
Deutsche Thomson-Brandt GmbH
European Patent Operations
Karl-Wiechert-Allee 74
30625 Hannover (DE)**

(56) References cited:
**EP-A- 0 466 981          US-A- 5 025 495
US-A- 5 036 393**

• **Webster's Unabridged, page 26 ("adjacent")**

**Description**

The present invention relates to a method and to an apparatus for correcting motion vectors.

Background

Block matching is well known as a robust and intuitively simple method of motion estimation for television pictures. The method works well when there is large or varied detail in each block, but can give incorrect results if the information in a block consists of a periodic structure, for example railings or Venetian blinds. The problem is fundamental to the fact that typical television field rates of 50Hz or 60Hz constitute severe temporal undersampling, leading to aliasing and therefore ambiguity in determining exactly what is present in the original moving image sequence. If the goal of the motion estimation is to provide a prediction, for example in coding applications, the problem of periodic structures is usually unimportant because a good prediction can be obtained even using the 'wrong' motion vector. However, when the application is temporal interpolation, for example 50Hz to 100Hz upconversion, the effect on the interpolated picture of an erroneous vector in a periodic structure can be severe, often leading to a complete phase reversal of the information in the interpolated field.

US-A-5025495 discloses a standards converter wherein in order to select a correct motion vector in case of multiple block matching error minima the size of the matching block is increased. It is also evaluated whether the difference between the minimum and a next block matching error minimum exceeds a certain percentage of the difference between the minimum and the block matching error maximum.

In EP-A-0466981 subblocks and vector component median filtering are considered in order to obtain more reliable motion vectors, i.e. a smooth vector field.

Invention

It is one object of the invention to disclose a method for correcting motion vectors in case of periodic structures in the picture. This object is reached by the method disclosed in claim 1.

It is a further object of the invention to disclose an apparatus which utilises the inventive method. This object is reached by the apparatus disclosed in claim 5.

According to the invention, the motion vectors resulting from block matching are corrected for periodic structures by taking a more reliable vector from the edge of a moving object containing the periodic structure. The invention requires very little additional processing after the block matching itself. The invention consists of two parts: detection of periodic structures and correction of motion vectors if a periodic structure is detected.

Detection of periodic structures

Block matching works usually by calculating a mean square or mean absolute error value for each candidate motion vector and selecting the motion vector that yields the minimum error. The block matching may be conventional or "two-sided" as described in WO-A-9507591 of the applicant. In order to save hardware complexity, the invention makes use of the error values already calculated in the block matching process.

Detection of periodic structures makes use of the fact that, if a block consists of a periodic structure, there will be other error values very close to the minimum value but corresponding to other motion vectors. But it is not sufficient simply to find another error value close to the minimum to be sure that the block is a periodic structure. First, errors for motion vectors very close to the chosen basic motion vector must be ignored, because the block might simply be low in detail or the true motion vector may be halfway between two adjacent candidates. Second, it should be recognised that non-periodic blocks containing detail in only one direction (for example edges) will give rise to a line of minima in the perpendicular direction, which should not be taken to indicate periodicity.

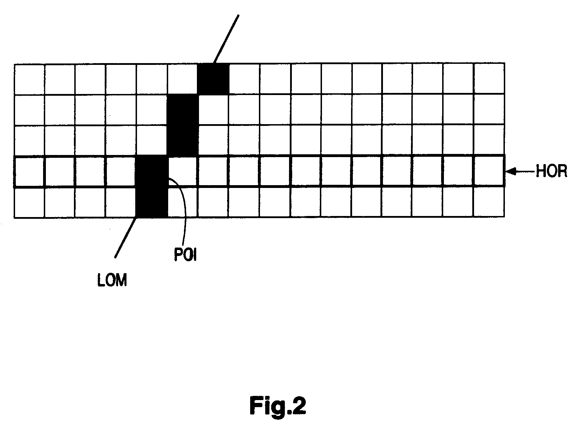

In general, this line of minima LOM will intersect a given horizontal row HOR (or vertical column) of errors at only one point POI, as shown in Fig. 2. The one exception to this, which is when the line of minima is itself horizontal (or vertical), is discussed below. In all other cases, the search for errors close to the minimum can be restricted to one horizontal row (or column), for example, the row (or column) containing the minimum. Periodic structures will in general give rise to a set of parallel lines of minima, which will intersect the horizontal row (or vertical column) in several places enabling the periodic structure to be detected. (However, due to picture statistics and hardware requirements the search along a row is preferred).

Therefore, the search is restricted to the row of errors containing the minimum and the errors adjacent to the minimum are ignored. This approach will overcome the false detection of periodic structures except in the case of blocks containing only vertical detail, which will produce a horizontal row of minima. This case can be detected by looking also at the maximum error in the row, demanding that it should exceed a certain value before the block can be deemed to be periodic. A look is taken at the row containing the motion vector because the vector range is usually much wider horizontally than vertically.

A further requirement is that the detection of periodic structures is more or less independent of the overall dynamic range of the block. Thus, the thresholds used for comparison should be scaled by some measure of this dynamic range. An approximate measure of dynamic range in the block and the area surrounding it or in a block shifted according to the current minimum error position is the maximum error resulting from the block matching process.

*Correction of motion vectors in periodic blocks*

If a block is periodic, the current motion vector is replaced by a more reliable one. The first approach is to replace the motion vector by the one calculated for the block immediately to the left, observing that that block may already have had its motion vector modified by the periodic structure algorithm. This approach assumes that the correct motion can be found to the left of the current block. A preferred approach is to select either the motion vector from the block to the left or the one from the block immediately above, whichever yields the smaller error in the current block, or to take a combination, in particular the mean, of both vectors. It would be possible in principle to look below and to the right (e.g. mean of all surrounding motion vectors), but in most hardware implementations this would lead to a massive increase in complexity. A possible refinement is to accept a replacement vector only if its error in the current block is below a certain threshold.

In principle, the inventive method is suited for correcting motion vectors which are related to pixel blocks into which the pictures of a video signal are divided and includes the following steps:

-   evaluating error values which are related to a matching of said pixel blocks between different pictures of said video signal, whereby, additional to a basic minimum error, a further minimum error belonging to adjacent pixel positions, except directly adjacent pixel positions, is searched along the row, or column, containing the pixel position of said basic minimum error;
-   comparing said further minimum error with a preselected threshold, resulting in a periodic structure decision if such further minimum error is less then said threshold;
-   when a periodic structure in the picture content is detected, replacing the current motion vector corresponding to said basic minimum error by a motion vector of an adjacent pixel block, in particular either from the block to the left or from the block above, whichever yields the smaller error in the current block, or by taking the mean of these both vectors.

Advantageous additional embodiments of the inventive method are resulting from the respective dependent claims.

In principle the inventive apparatus for correcting motion vectors which are related to pixel blocks, into which the pictures of a video signal are divided, includes:

a) evaluating means for error values which are related to a matching of said pixel blocks between different pictures of said video signal, whereby:

-   first minimum value means calculate from said error values a basic minimum error related to the current motion vector;
-   second minimum value means calculate a further minimum error belonging to adjacent pixel positions, except directly adjacent pixel positions, along the row, or column, containing the pixel position of said basic minimum error;
-   first maximum value means calculate a maximum error from said error values, from which two threshold values are derived, using errors involved in the calculation of said basic minimum error, which in particular belong to the current block or to a block shifted according to the current minimum error position;
-   second maximum value means calculate from said error values a maximum error in the row, or column, containing the pixel position of said basic minimum error;

b) first comparing means for comparing the difference values between the outputs of said second and said first minimum value means with a first of said thresholds, resulting in first periodic structure decision if said further minimum error value is less then said threshold;
c) second comparing means for comparing the difference values between the outputs of said second maximum and said first minimum value means with a second of said thresholds, resulting in a second periodic structure decision if said further minimum error value is greater than/equal to said threshold;
d) combining means for forming a final periodic structure decision from said first and said second periodic structure decision;

e) vector replacement means which replace the current motion vector corresponding to said basic minimum error by a motion vector of an adjacent pixel block, in particular the left or the above or the mean of both, when said final periodic structure decision indicates that a periodic structure in the picture content is detected.

Advantageous additional embodiments of the inventive apparatus are resulting from the respective dependent claims.

Drawings

Preferred embodiments of the invention are described with reference to the accompanying drawings, which show in:

Fig. 1 motion vector correction circuit;
Fig. 2 line of error minima intersecting a row of pixels.

Preferred embodiments

The following is a specific embodiment of the periodic structure detection part of the invention. Suppose that the motion vector range is [-M,+M] horizontally and [-N,+N] vertically, with the chosen motion vector equal to (X,Y). Let the errors for each motion vector resulting from the block matching process be E(x,y), x = -M,...,+M, y = -N,...,+N. We calculate four quantities:

$$E_1 = E(X,Y), \text{ the minimum error}$$

$$E_2 = \max_{x,y} \{E(x,y)\}, \text{ the maximum error}$$

$$E_3 = \min_{x(x \neq X-1, X, X+1)} \{E(x,Y)\}, \text{ the row minimum away from (X,Y)}$$

$$E_4 = \max_x \{E(x,Y)\}, \text{ the row maximum}$$

The block is periodic if, and only if,

$$E_3 - E_1 < E_2/4 \text{ and } E_4 - E_1 \geq E_2/2$$

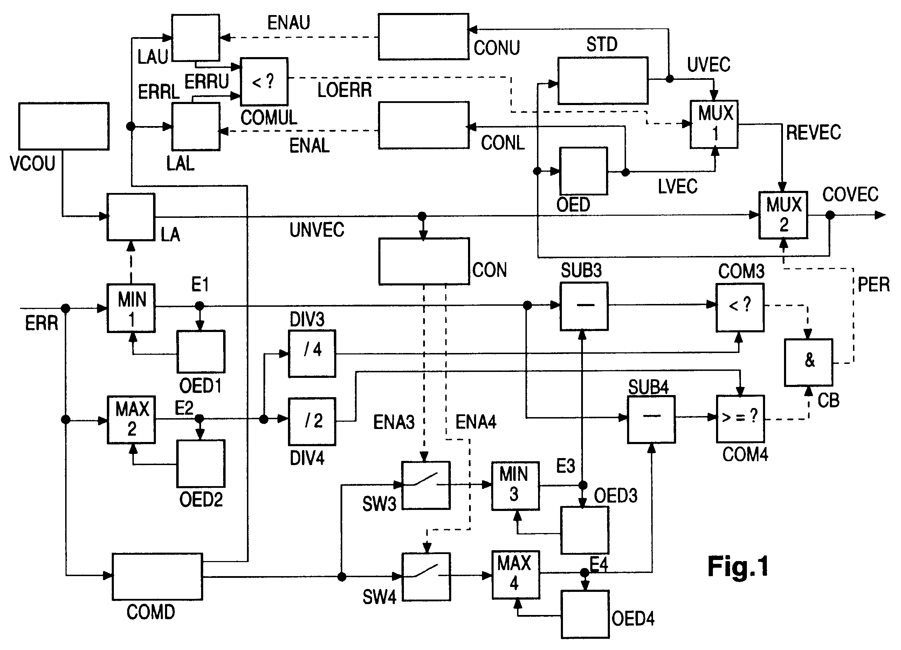

Figure 1 gives a block diagram of a possible hardware implementation of an inventive apparatus for periodic structure detection and correction. The block matching errors ERR enter the apparatus serially in a predetermined order, synchronous with a vector counter VCOU which generates the corresponding motion vector coordinates x and y. The minimum $E_1$ of all the errors is calculated serially using a two-input minimum function circuit MIN1 and a one-sample feedback delay OED1. When all the errors have passed through, the vector UNVEC corresponding to the minimum will appear at the output of a latch LA. This vector UNVEC forms the input to a control block CON which generates two enable signals ENA4, ENA3, the first corresponding to the row containing the minimum error E1 for the calculation of the maximum row error $E_4$ and the second for the same row, excluding the minimum error and its adjacent errors, for the calculation of the specific minimum row error $E_3$.
The errors ERR pass also through a compensating delay COMD and two parallel switches SW3, SW4 which are controlled by signals ENA3, ENA4. E3 is calculated using a two-input minimum function circuit MIN3 following SW3 and a one-sample feedback delay OED3. E4 is calculated using a two-input maximum function circuit MAX4 following SW4 and a one-sample feedback delay OED4.
$E_3$ and $E_4$ are each subtracted in subsequent subtractors SUB3, SUB4 from $E_1$ and the results compared in comparing circuits COM3, COM4 with suitable fractions of $E_2$, the block maximum which is calculated in a similar way to the minimum $E_1$, using a two-input maximum function circuit MAX2 fed with errors ERR and a one-sample feedback delay OED2. E2 is divided by 4 (e.g. shift operation) in dividing circuit DIV3 and fed to COM3. E2 is also divided by 2 (e.g. shift operation) in dividing circuit DIV4 and fed to COM4. COM3 determines, if the output of DIV3 ($E_2/4$) is greater than the output of SUB3 ($E_3-E_1$). COM4 determines, if the output of DIV4 ($E_2/2$) is less than, or equal to, the output of SUB4 ($E_4-E_1$). The outputs of COM3 and COM4 are combined in an AND gate CB. A positive result PER from both comparisons indicates that the current block is periodic.
The errors related to the "up" and "left" vectors UVEC, LVEC emerging from suitable delay means STD and OED form the input to control blocks CONU, CONL which enable via signals ENAU, ENAL latches LAU, LAL to capture the two errors ERRU, ERRL corresponding to these two vectors. The result LOERR of a comparison in comparator circuit COMUL between these two errors ERRU and ERRL selects in a multiplexer MUX1 between the related two vectors UVEC, LVEC. The periodic structure detection signal PER selects in a further multiplexer MUX2 between the resulting replacement vector REVEC and the uncorrected vector UNVEC, the final result COVEC forming the output of the apparatus and the input to the delays OED and STD for subsequent replacement vectors.

OED is a one-element delay providing vector LVEC from the result vectors COVEC. STD is a stripe (line) delay providing vector UVEC from the result vectors COVEC.

The invention can be used in e.g. TV receivers, VCRs and CD-I players/recorders, also for standards conversion, slow motion generation and noise reduction.

**Claims**

1. Method for correcting motion vectors which are related to pixel blocks into which the pictures of a video signal are partitioned, wherein error values (ERR) are evaluated which are related to a matching of said pixel blocks between different pictures of said video signal, and wherein for a current pixel block in addition to a basic minimum matching error (E1) corresponding to a first matching position a next minimum matching error (E3) corresponding to a second matching position which is not adjacent to said first matching position is determined,
   **characterised** in that the second matching position is located within a given pixel row (HOR) or pixel column, respectively, containing the pixel corresponding to said first matching position,
   and that said next minimum matching error is compared (COM3) with a preselected first threshold, resulting in a periodic structure decision if said next minimum matching error is less then said first threshold;
   and that, when a periodic structure in the picture content is detected, the motion vector corresponding to said first matching position is replaced by the motion vector from the block to the left or from the block above, whichever yields a smaller matching error for the current block, or is replaced by a motion vector which is the mean of these both vectors, or is replaced by a motion vector from any other block adjacent to the current block.

2. Method according to claim 1, wherein a periodic structure in the picture content is determined only when the maximum matching error in the given row or column, respectively, exceeds a second threshold.

3. Method according to claim 1 or 2, wherein said first and/or said second threshold is scaled in relation to the dynamic range of the block, in particular to the maximum matching error belonging to a current pixel block or to a pixel block shifted according to the first matching position.

4. Method according to any of claims 1 to 3, wherein: basic minimum matching error $E_1 = E(X,Y)$; maximum matching error $E_2 = \max_{x,y} \{E(x,y)\}$;
   row or column minimum matching error

$$E_3 = \min_{x(x \neq X\text{-}1, X, X+1)} \{E(x,Y)\};$$

   row or column maximum matching error

$$E_4 = \max_x \{E(x,Y)\},$$

   and the block is periodic if, and only if,

$$E_3\text{-}E_1 < E_2/4 \text{ and } E_4\text{-}E_1 \geq E_2/2,$$

   wherein the motion vector range is [-M,+M] horizontally and [-N,+N] vertically and the chosen motion vector related to said first matching position is equal to $(X,Y)$ and the errors for candidate motion vectors are $E(x,y)$, $x = -M,...,+M$, $y = -N,...,+N$.

5. Method according to any of claims 1 to 4, wherein the replacement motion vector is accepted only if its corresponding error in the current block is below a certain threshold.

6. Apparatus for correcting motion vectors which are related to pixel blocks into which the pictures of a video signal are partitioned, including evaluating means for evaluating error values (ERR) which are related to a matching of said pixel blocks between different pictures of said video signal, wherein first minimum value means (MIN1, OED1) calculate from said error values (ERR) a basic minimum matching error (E1) corresponding to a first matching position, **characterised** by:

- second minimum value means (SW3, MIN3, OED3) which calculate a next minimum matching error (E3) corresponding to a second matching position which is not adjacent to said first matching position, that calculation being carried out within a given pixel row (HOR) or pixel column, respectively, containing the pixel corresponding to said first matching position,
- first maximum value means (MAX2, OED2) which calculate from said error values (ERR) a maximum matching error (E2) from which two threshold values are derived (DIV3, DIV4), using errors involved in the calculation of said basic minimum matching error, which in particular belong to the current block or to a block shifted according to said first matching position;
- second maximum value means (SW4, MAX4, OED4) which calculate from said error values (ERR) a maximum matching error (E4) in said given pixel row or column, respectively;
- first comparing means (SUB3, COM3) which compare the difference values between the outputs of said second and said first minimum value means with a first of said thresholds, resulting in first periodic structure decision if said next minimum matching error is less then said first threshold;
- second comparing means (SUB4, COM4) which compare the difference values between the outputs of said second maximum and said first minimum value means with a second of said thresholds, resulting in second periodic structure decision if said next minimum matching error is greater than or equal to said second threshold;
- combining means (CB) which form a final periodic structure decision (PER) from said first and said second periodic structure decision;
- vector replacement means (LA, MUX2) which replace, when said final periodic structure decision (PER) indicates that a periodic structure in the picture content is detected, the current motion vector corresponding to said basic minimum matching error (E1) by the motion vector from the block to the left or from the block above, whichever yields using comparing means (COMUL) a smaller matching error for the current block, or by a motion vector which is the mean of these both vectors, or by a motion vector from any other block adjacent to the current block.

**Patentansprüche**

1. Verfahren zum Korrigieren von Bewegungs-Vektoren, die auf Pixelblöcke bezogen sind, in die die Bilder eines Videosignals unterteilt sind, bei dem Fehlerwerte (ERR) abgeschätzt werden, die auf eine Anpassung der Pixelblöcke zwischen verschiedenen Bildern des Videosignals bezogen sind, und bei dem für einen gegenwärtigen Pixelblock zusätzlich zu einem grundsätzlichen minimalen Anpassungsfehler (E1), der einer ersten Anpassungs-Position entspricht, ein nächster minimaler Anpassungsfehler (E3), der einer zweiten Anpassungs-Position entspricht, die nicht der ersten Anpassungs-Position benachbart ist, bestimmt wird, dadurch gekennzeichnet, daß die zweite Anpassungs-Position sich in einer gegebenen Pixelreihe (HOR) bzw. Pixelspalte befindet, die das Pixel enthält, das der ersten Anpassungs-Position entspricht, daß der nächste minimale Anpassungsfehler mit einem vorgegebenen ersten Schwellwert verglichen wird (COM3), was zu einer periodischen Strukturentscheidung führt, wenn der nächste minimale Anpassungsfehler kleiner als der erste Schwellwert ist, und daß, wenn eine periodische Struktur in dem Bildinhalt festgestellt wird, der Bewegungs-Vektor, der der ersten Anpassungs-Position entspricht, durch den Bewegungs-Vektor von dem Block links oder von dem Block oberhalb, welcher von ihnen einen kleineren Anpassungsfehler für den gegenwärtigen Block aufweist, ersetzt wird, oder durch einen Bewegungs-Vektor ersetzt wird, der der Mittelwert dieser beiden Vektoren ist, oder durch einen Bewegungs-Vektor von einem anderen, dem gegenwärtigen Block benachbarten Block ersetzt wird.

2. Verfahren nach Anspruch 1, bei dem eine periodische Struktur in dem Bildinhalt nur bestimmt wird, wenn der maximale Anpassungsfehler in der gegebenen Reihe bzw. Spalte einen zweiten Schwellwert überschreitet.

3. Verfahren nach Anspruch 1 oder 2, bei dem der erste und/oder der zweite Schwellwert in Bezug auf den Dynamikbereich des Blocks skaliert wird, insbesondere den maximalen Anpassungsfehler, der zu einem gegenwärtigen Pixelblock gehört, oder zu einem Pixelblock, der gemäß der ersten Anpassungs-Position verschoben ist.

4. Verfahren nach einem der Ansprüche 1 bis 3, bei dem der grundsätzliche minimale Anpassungsfehler $E_1 = E(X, Y)$; der maximale Anpassungsfehler $E_2 = \max_{x,y} \{E(x,y)\}$; der minimale Reihen- oder Spalten-Anpassungsfehler

$$E_3 = \min_{x(x = X\text{-}1,\, X,\, X+1)} \{E(x,Y)\};$$

der maximale Reihen- oder Spalten-Anpassungsfehler

$$E_4 = \max_x \{E(x,Y)\};$$

und der Block periodisch ist, und nur wenn,

$$E_3 - E_1 < E_2/4 \text{ und } E_4 - E_1 \geq E_2/2,$$

wobei der Bewegungs-Vektorbereich [-M, +M] horizontal und [-N, +N] vertikal ist und der gewählte auf die erste Anpassungs-Position bezogene Bewegungs-Vektor gleich (X,Y) ist und die Fehler für die Anwärter-Bewegungs-Vektoren $E(x,y)$, $x = -M, ..., +M$, $y = -N, ... +N$ sind.

5. Verfahren nach einem der Ansprüche 1 bis 4, bei dem der Ersatz-Bewegungs-Vektor nur akzeptiert wird, wenn sein entsprechender Fehler in dem gegenwärtigen Block unterhalb eines bestimmten Schwellwertes ist.

6. Vorrichtung zur Korrektur von Bewegungs-Vektoren, die auf Pixelblöcke bezogen sind, in die die Bilder eines Videosignals unterteilt sind, einschließlich Abschätzungsmitteln zur Abschätzung von Fehlerwerten (ERR), die auf eine Anpassung der Pixelblöcke zwischen unterschiedlichen Bildern des Videosignals bezogen sind, wobei erste Minimalwert-Mittel (MIN1, OED1) aus den Fehlerwerten (ERR) einen grundsätzlichen minimalen Anpassungsfehler (E1) berechnen, der einer ersten Anpassungs-Position entspricht, <u>gekennzeichnet durch</u>

- zweite Minimalwert-Mittel (SW3, MIN3, OED3), die einen nächsten minimalen Anpassungsfehler (E3) berechnen, der einer zweiten Anpassungs-Position entspricht, die nicht neben der ersten Anpassungs-Position liegt, wobei die Berechnung in einer gegebenen Pixelreihe (HOR) bzw. Pixelspalte ausgeführt wird, die das Pixel enthält, das der ersten Anpassungs-Position entspricht;
- erste Maximalwert-Mittel (MAX2, OED2), die aus den Fehlerwerten (ERR) einen maximalen Anpassungsfehler (E2) berechnen, aus dem zwei Schwellwerte (DIV3, DIV4) abgeleitet werden, wobei Fehler verwendet werden, die bei der Berechnung des grundsätzlichen minimalen Anpassungsfehlers betroffen sind, der insbesondere zu dem gegenwärtigen Block oder zu einem Block gehört, der gemäß der ersten Anpassungs-Position verschoben ist;
- zweite Maximalwert-Mittel (SW4, MAX4, OED4), die aus den Fehlerwerten (ERR) einen maximalen Anpassungsfehler (E4) in der gegebenen Pixelreihe bzw. -spalte berechnen;
- erste Vergleichsmittel (SUB3, COM3), die die Differenzwerte zwischen den Ausgängen der zweiten und ersten MinimalewertMittel mit einem ersten der Schwellwerte vergleichen, was zu einer ersten periodischen Strukturentscheidung führt, wenn der nächste minimale Anpassungsfehler kleiner als der erste Schwellwert ist;
- zweite Vergleichsmittel (SUB4, COM4), die die Differenzwerte zwischen den Ausgängen der ersten Maximal-und der ersten Minimalwert-Mittel mit einem zweiten der Schwellwerte vergleichen, was zu einer zweiten periodischen Strukturentscheidung führt, wenn der nächste minimale Anpassungsfehler größer oder gleich dem zweiten Schwellwert ist;
- Kombinationsmittel (CB), die eine endgültige periodische Strukturentscheidung (PER) aus der ersten und zweiten periodischen Strukturentscheidung bilden;
- Vektor-Austauschmittel (LA, MUX2), die, wenn die endgültige periodische Strukturentscheidung (PER) anzeigt, daß eine periodische Struktur in dem Bildinhalt festgestellt wird, den gegenwärtigen Bewegungs-Vektor, der dem grundsätzlichen minimalen Anpassungsfehler (E1) entspricht, durch den Bewegungs-Vektor von dem Block links oder dem Block oberhalb, welcher von ihnen unter Verwendung der Vergleichsmittel (COMUL) einen kleineren Anpassungsfehler für den gegenwärtigen Block aufweist, ersetzt wird, oder durch einen Bewegungs-Vektor ersetzt wird, der der Mittelwert dieser beiden Vektoren ist, oder durch den Bewegungs-Vektor von einem anderen, dem gegenwärtigen Block benachbarten Block ersetzt wird.

**Revendications**

1. Méthode pour corriger des vecteurs - mouvement en relation avec des blocs de pixels en lesquels sont découpées les images d'un signal vidéo, dans laquelle on évalue des valeurs d'erreur (ERR) en rapport avec la concordance desdits blocs de pixels entre des images différentes dudit signal vidéo,

et dans laquelle on détermine pour un bloc de pixels courant en plus d'une erreur de concordance minimale de base (E1) correspondant à une première position de concordance, une erreur de concordance minimale suivante (E3) correspondant à une seconde position de concordance qui n'est pas adjacente à ladite première position de concordance est déterminée,

caractérisée en ce que la seconde position de concordance est placée respectivement à l'intérieur d'une rangée de pixels (HCR) ou d'une colonne de pixels donnée, contenant le pixel correspondant à ladite première position de concordance,

et en ce que l'erreur de concordance minimale suivante est comparée (COM3) avec un premier seuil présélectionné, résultant en une décision de structure périodique si ladite erreur de concordance minimale suivante est inférieure audit seuil ;

et, en ce que, lorsque l'on détecte la structure périodique dans le contenu de l'image, le vecteur mouvement correspondant à ladite première position de concordance est remplacé par le vecteur mouvement provenant du bloc à gauche ou du bloc au-dessus, celui qui présente une erreur de concordance plus petite pour le bloc courant, ou est remplacé par un vecteur mouvement qui est la moyenne de ces deux vecteurs mouvement, ou est remplacé par un vecteur mouvement provenant de tout autre bloc adjacent au bloc courant.

2. Méthode selon la revendication 1, dans laquelle une structure périodique dans le contenu de l'image est déterminée seulement lorsque l'erreur de concordance maximale dans la rangée ou colonne donnée, respectivement, dépasse un second seuil.

3. Méthode selon la revendication 1 ou 2, dans laquelle ledit premier et/ou second seuil est gradué en fonction de l'étendue dynamique du bloc, en particulier de l'erreur de concordance maximale appartenant à un bloc de pixels courant ou à un bloc de pixels décalé selon la première position de concordance.

4. Méthode selon l'une quelconque des revendications 1 à 3, dans laquelle :
l'erreur de concordance minimale de base $E1 = E(X, Y)$;
l'erreur de concordance maximale $E2 = \max_{x,y} \{ E(x, y) \}$ ;
l'erreur de concordance minimale de rangée ou de colonne

$$E3 = \min_x (x = X - 1, X, X + 1) \{E(x, Y)\};$$

l'erreur de concordance maximale de rangée ou de colonne

$$E4 = \max_x \{ E(x, Y) \}, \text{ et}$$

le bloc est périodique si, et seulement si,

$$E3 - E1 < E2 / 4 \text{ et } E4 - E1 \geq E2/2,$$

dans laquelle l'étendue du vecteur mouvement est horizontalement $\{ - M, + M \}$ et verticalement $\{ - N, + N \}$ et le vecteur mouvement choisi en relation avec ladite première position de concordance est égale à $\{ X, Y \}$ et les erreurs pour les vecteurs mouvement candidats sont $E(x, y)$, $x = - M, ...., + M$, $y = N, ....., + N$.

5. Méthode selon l'une quelconque des revendications 1 à 4, dans laquelle le vecteur mouvement de remplacement est accepté seulement si son erreur correspondante dans le bloc courant est en-dessous d'un certain seuil.

6. Appareil pour corriger des vecteurs mouvement en relation avec des blocs de pixels en lesquels sont découpées les images d'un signal vidéo, incluant des moyens d'évaluation pour évaluer des valeurs d'erreur (ERR) en rapport avec la concordance desdits blocs de pixels entre des images différentes dudit signal vidéo, dans lequel des premiers moyens de valeur minimale (MIN1, OED1) calculent à partir des valeurs d'erreur (ERR) une erreur de concordance minimale de base (E1) correspondant à une première position de concordance,
caractérisé par :

- des seconds moyens de valeur minimale (SW3, MIN3, OED3) qui calculent une erreur de concordance minimale suivante (E3) correspondant à une seconde position de concordance qui n'est pas adjacente à ladite première position de concordance, le calcul étant réalisé à l'intérieur d'une rangée de pixels (HCR) ou d'une colonne de pixels donnée, respectivement, contenant le pixel correspondant à ladite première position de concordance,
- des premiers moyens de valeur maximale (MAX2, OED2) qui calculent à partir desdites valeurs d'erreur (ERR), une erreur de concordance maximale (E2) à partir de laquelle sont dérivées (DIV3, DIV4) deux valeurs de seuil, en utilisant les erreurs impliquées dans le calcul de ladite erreur de concordance minimale de base, qui appartient en particulier au bloc courant ou au bloc décalé selon ladite première position de concordance ;

- des seconds moyens de valeur maximale (SW4, MAX4, OED4) qui calculent à partir desdites valeurs d'erreur (ERR) une erreur de concordance maximale (E4) dans ladite rangée ou colonne de pixels donnée, respectivement ;

- des premiers moyens de comparaison (SUB3, COM3) qui comparent les valeurs-différence entre les sorties desdits second et premier moyens de valeur minimale avec un premier desdits seuils, résultant en une première décision de structure périodique si l'erreur de concordance minimale suivante est inférieure audit premier seuil ;

- des seconds moyens de comparaison (SUB4, COM4) qui comparent les valeurs-différence entre les sorties desdits seconds moyens de valeur maximale et desdits premiers moyens de valeur minimale avec le seconde desdits seuils, résultant en une seconde décision de structure périodique si ladite erreur de concordance minimale suivante est supérieure à ou égale audit second seuil ;

- des moyens de combinaison (CB) qui forme une décision de structure périodique finale (PER) à partir de ladite première et seconde décisions de structure périodique ;

- des moyens de remplacement de vecteur (LA, MUX2) qui remplace, lorsque ladite décision de structure périodique finale (PER) indique qu'une structure périodique dans le contenu de l'image est détectée, le vecteur mouvement courant correspondant à ladite erreur de concordance minimale de base (E1) par le vecteur mouvement provenant du bloc à gauche ou du bloc de dessus, celui qui présente en utilisant les moyens de comparaison (COMUL) une erreur de concordance plus petite pour le bloc courant, ou par un vecteur mouvement qui est la moyenne de ces deux vecteurs, ou par un vecteur mouvement provenant de tout autre bloc adjacent au bloc courant.

Fig.1

EP 0 647 919 B1

Fig.2